# EUROPEAN PATENT APPLICATION

(11) **EP 2 532 723 A1**
(43) Date of publication of application: **12.12.2012**
(21) Application number: 11739636.6
(22) Date of filing: 24.01.2011
(51) Int. Cl.: C09J 7/00, C09J 11/04, C09J 133/04

(54) **THERMALLY-CONDUCTIVE DOUBLE-SIDED ADHESIVE SHEET**

(30) Priority: 04.02.2010 JP 2010023330
(71) Applicant: Nitto Denko Corporation, Osaka 567-8680 (JP)
(72) Inventor: TERADA, Yoshio, Ibaraki-shi Osaka 567-8680 (JP); NAKAYAMA, Junichi, Ibaraki-shi Osaka 567-8680 (JP); FURUTA, Kenji, Ibaraki-shi Osaka 567-8680 (JP); SHOUJI, Akira, Ibaraki-shi Osaka 567-8680 (JP); TSUKAGOSHI, Tatsuya, Ibaraki-shi Osaka 567-8680 (JP); TOJO, Midori, Ibaraki-shi Osaka 567-8680 (JP)
(74) Representative: Stolmár & Partner
(86) International application number: PCT/JP2011/051161
(87) International publication number: WO 2011/096287

(57) **Abstract**

Provided is a thermally-conductive double-sided adhesive sheet capable of improving the workability when adherends are bonded to or detached from each other. The thermally-conductive double-sided adhesive sheet includes an adhesive agent layer formed of a thermally-conductive adhesive agent composition formed into a sheet, which composition including a thermally-conductive material and an acrylic polymer component, wherein a strong adhesive agent layer forming one side and a weak adhesive agent layer forming the other side of the thermally-conductive double-sided adhesive sheet are laminated in such a way that the adhesive force of the one side of the thermally-conductive double-sided adhesive sheet to an adherend is stronger than the adhesive force of the other side of the thermally-conductive double-sided adhesive sheet to the adherend.

## Description

### TECHNICAL FIELD

The present invention relates to a double-sided adhesive sheet improved in the thermal conductivity thereof.

### BACKGROUND ART

There is an adverse possibility that heat generating bodies such as machines and electronic parts are degraded in performances or broken when heat is accumulated in the interior thereof; accordingly, it has hitherto been attempted to maintain the performances and to prevent the breakage of such heat generating bodies by making heat radiating bodies adhere onto the surface of such heat generating bodies to radiate heat to the outside.

When a heat generating body and a heat radiating body are made to adhere to each other, double-sided adhesive sheets having thermal conductivity are widely used. The thermally-conductive double-sided adhesive sheet includes a thermally-conductive material in the adhesive agent layer formed of a resin composition; the thermally-conductive double-sided adhesive sheet is improved in thermal conductivity by the inclusion of the thermally-conductive material as compared to the case where the adhesive agent layer is formed with the resin composition as a single substance. Thus, the heat of the heat generating body bonded to one side of the thermally conductive double-sided adhesive sheet can be effectively transferred to and radiated from the heat radiating body bonded to the other side of the thermally conductive double-sided adhesive sheet.

When by using such a thermally-conductive double-sided adhesive sheet as described above, the heat generating body and the heat radiating body (hereinafter, in the present invention, the heat generating body and the heat radiating body are collectively referred to as the "adherends") are made to adhere to each other, one of the release films bonded to both sides of the thermally-conductive double-sided adhesive sheet is peeled off and the sheet is bonded to one adherend, and then the other release film is peeled off and the other adherend is bonded to a predetermined position of the sheet.

As described above, in the thermally-conductive double-sided adhesive sheet, the release film thereof is peeled off under the condition that the thermally-conductive double-sided adhesive sheet is bonded to the adherend, and hence the thermally-conductive double-sided adhesive sheet is required to have an adhesive force sufficient to prevent the thermally-conductive double-sided adhesive sheet from being detached from the adherend due to the force exerted at the time of peeling off the release film. Alternatively, the adherend to which the thermally-conductive double-sided adhesive sheet may be subjected in some cases to a heat treatment such as solder reflow, and hence the thermally-conductive double-sided adhesive sheet is also required to have an adhesive force sufficient to prevent the thermally-conductive double-sided adhesive sheet from being detached from the adherend by the effect of such a heat treatment.

Additionally, when adherends are mutually bonded, sometimes the positions of the mutual bonding of the adherends are mismatched, or sometimes air bubbles enter between the thermally-conductive double-sided adhesive sheet and the adherends. In such cases, for the purpose of bonding over again the adherends to each other, it is necessary to detach the adherends from each other. Alternatively, when the adherends are classified for disposal or one of the adherends is replaced, it is necessary to detach the adherends from each other. In other words, the thermally-conductive double-sided adhesive sheet is required to have an adhesive force of such a degree that the thermally-conductive double-sided adhesive sheet is allowed to be easily detached from an adherend if necessary

As described above, the thermally-conductive double-sided adhesive sheet is required to have an adhesive force such that the thermally-conductive double-sided adhesive sheet is not unintentionally detached from the adherend, and is allowed to be easily detached if necessary. Patent Document 1 discloses a thermally-conductive double-sided adhesive sheet including an adhesive agent layer formed of a thermally-conductive adhesive agent composition constituted so as to have such an adhesive force.

### CITATION LIST

### PATENT DOCUMENT

Patent Document 1: Japanese Patent Laid-Open No. Hei-10-316953

### SUMMARY OF INVENTION

### TECHNICAL PROBLEM

However, in such a thermally-conductive double-sided adhesive sheet as disclosed in Patent Document 1, the adhesive agent layer thereof is formed of a single thermally-conductive adhesive agent composition, the adhesive forces of both sides of the thermally-conductive double-sided adhesive sheet are the same, and hence, for example, there is an adverse possibility such that when a heat treatment is performed under the condition that an adherend is bonded to one side, the adhesive force to the adherend is decreased due to the heating, and accordingly, the thermally-conductive double-sided adhesive sheet is unintentionally detached from the adherend by the force exerted to the adherend when the release film of the other side is peeled off. In this way, such a thermally-conductive double-sided adhesive sheet as described above is low in the workability when the adherends are bonded to or detached from each other.

Accordingly, in view of the aforementioned problems, it is an object of the present invention to provide a thermally-conductive double-sided adhesive sheet capable of improving the workability when adherends are bonded to or detached from each other.

### SOLUTION TO PROBLEM

According to the present invention, there is provided a thermally-conductive double-sided adhesive sheet including an adhesive agent layer formed of a thermally-conductive adhesive agent composition formed into a sheet, the thermally-conductive adhesive agent composition including a thermally-conductive material and an acrylic polymer component, wherein a strong adhesive agent layer forming one side and a weak adhesive agent layer forming the other side of the thermally-conductive double-sided adhesive sheet are laminated in such a way that the adhesive force of the one side of the thermally-conductive double-sided adhesive sheet to an adherend is stronger than the adhesive force of the other side of the thermally-conductive double-sided adhesive sheet to an adherend.

According to the above configuration, the thermally-conductive double-sided adhesive sheet is configured in such a way that the adhesive force to the adherend bonded to one side of the adhesive agent layer and the adhesive force to the adherend bonded to the other side of the adhesive agent layer are different from each other; thus, for example, in the case where the sheet is configured in such a way that the adhesive force of one side is stronger than the adhesive force of the other side, even when the release film bonded to the other side is peeled off under the condition that an adherend is bonded to the one side, the sheet is prevented from being unintentionally detached from the adherend. Additionally, the thermally-conductive double-sided adhesive sheet can be more easily detached from the adherend bonded to the other side than from the adherend bonded to the one side. Consequently, it is possible to improve the workability in the case where the adherends are bonded to or detached from each other.

Also, even in the case where the adhesive force of the one side of the thermally-conductive double-sided adhesive sheet is configured in such a way that the thermally-conductive double-sided adhesive sheet cannot be detached from the adherend bonded to the one side, the adhesive force of the other side of the thermally-conductive double-sided adhesive sheet can be configured in such a way that the thermally-conductive double-sided adhesive sheet can be easily detached from the adherend bonded to the other side; thus, it comes to be possible to use the thermally-conductive double-sided adhesive sheet by selecting the sides to be bonded to and the types of the adherend to be bonded according to the types of the adherends and the use environment.

The inclusion of the strong adhesive agent layer and the weak adhesive agent layer laminated on each other facilitates the alteration of the adhesive force combination of the strong adhesive agent layer and the weak adhesive agent layer. Specifically, with respect to one strong adhesive agent layer (or one weak adhesive agent layer), it is possible to laminate one layer selected from a plurality of weak adhesive agent layers (or strong adhesive agent layers) different in adhesive force from each other, and thus, it is possible to easily alter the adhesive force combination.

The strong adhesive agent layer preferably includes less than 150 parts by weight of a thermally-conductive material in relation to 100 parts by weight of the acrylic polymer component, and at the same time, the weak adhesive agent layer preferably includes 150 parts by weight or more of a thermally-conductive material in relation to 100 parts by weight of the acrylic polymer component.

The adhesive force of the weak adhesive agent layer to a SUS304 steel plate is preferably less than 5.0 N/20 mm, and the adhesive force of the strong adhesive agent layer to a SUS304 steel plate is preferably 5.0 N/20 mm or more.

The thermally-conductive material preferably includes one or two or more substances selected from the group consisting of boron nitride, aluminum hydroxide and aluminum oxide.

The thermal conductivity of the strong adhesive agent layer and the thermal conductivity of the weak adhesive agent layer are preferably each 0.5 W/m·K or more.

### ADVANTAGEOUS EFFECT OF INVENTION

As described above, according to the present invention, it is possible to improve the workability when adherends are bonded to or detached from each other.

### DESCRIPTION OF EMBODIMENTS

Hereinafter, the preferred embodiments of the present invention will be described.

The thermally-conductive double-sided adhesive sheet according to the present invention includes an adhesive agent layer formed of a thermally-conductive adhesive agent composition formed into a sheet, the thermally-conductive adhesive agent composition including a thermally-conductive material and an acrylic polymer component. Examples of the adhesive agent layer include: an adhesive agent layer formed with the thermally-conductive adhesive agent composition being retained itself in a sheet shape; and an adhesive agent layer formed by laminating in a sheet shape the thermally-conductive adhesive agent composition on a support or substrate such as a resin film.

The thermally-conductive double-sided adhesive sheet according to the present invention is configured in such a way that the adhesive force to the adherend bonded to one side of the adhesive agent layer and the adhesive force to the adherend bonded to the other side of the adhesive agent layer are different from each other. Specifically in the thermally-conductive double-sided adhesive sheet according to the present invention, the adhesive agent layer is formed by using two kinds of thermally-conductive adhesive agent compositions configured so as to have different adhesive forces when formed into sheet shapes to form the adhesive agent layer. In the following description, of the two kinds of thermally-conductive adhesive agent compositions, the composition configured so as to have the stronger adhesive force when formed into the adhesive agent layer is described as the strong adhesive agent composition, and the composition configured so as to have the weaker adhesive force when formed into the adhesive agent layer is described as the weak adhesive agent composition.

In the present invention, the adhesive forces of the adhesive agent layers formed of the adhesive agent compositions can be regulated by regulating the mixing amount of the thermally-conductive material. Thus, in addition to the regulation of the adhesive force, particularly preferably the thermal conductivity can be also appropriately regulated. Moreover, the adhesive force of the adhesive agent layer can also be regulated, for example, by regulating the type and the molecular weight of the acrylic polymer constituting each of the adhesive agent compositions, and by regulating the gel fraction of the acrylic polymer. The adhesive force of the adhesive agent layer can also be regulated by regulating the mixing amounts of the additives such as a tackifier resin and a silane coupling agent.

The adhesive forces of both sides of the thermally-conductive double-sided adhesive sheet to a SUS304 steel plate are configured in such a way that the adhesive force of one side (strong adhesive side) is 5.0 N/20 mm or more, preferably 6.0 N/20 mm or more and more preferably 7.0 N/20 mm or more, and usually 20 N/20 mm or less, and the adhesive force of the other side (weak adhesive side) exceeds 0 N/20 mm and less than 5.0 N/20 mm, preferably 4.5 N/20 mm or less and more preferably 4.3 N/20 mm or less. It is to be noted that "the adhesive force to the SUS304 steel plate" is the force measured by the method described in below-described Examples.

The acrylic polymer component is not particularly limited, and commonly used acrylic polymers can be used as the acrylic polymer component. As the acrylic polymer, the polymers constituted with the (meth)acrylic monomers represented by the following general formula (1) as the monomer units can be used.

[Formula 11 CH₂=C(R¹)COOR² (1)

(wherein R¹ is a hydrogen atom or a methyl group, and R² is an alkyl group having 2 to 14 carbon atoms.)

In the foregoing general formula (1), R¹ is a hydrogen atom or a methyl group. In the foregoing general formula (1), R² is an alkyl group having 2 to 14 carbon atoms; however, R² is preferably an alkyl group having 3 to 12 carbon atoms and more preferably an alkyl group having 4 to 9 carbon atoms. As the alkyl group represented by R², either of a liner alkyl group and a branched alkyl group can be used; a branched alkyl group is preferably used because of being low in glass transition point.

Examples of the (meth)acrylic monomer represented by the general formula (1) include: ethyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, isostearyl (meth)acrylate and phenoxyethyl (meth)acrylate.

In the present invention, the (meth)acrylic monomers represented by the foregoing general formula (1) may be used each alone or as mixtures of two or more thereof. The total content of the (meth)acrylic monomer(s) is 50 to 98% by weight, preferably 60 to 98% by weight and more preferably 70 to 90% by weight in relation to the total amount of the monomers constituting the acrylic polymer. The content of the (meth)acrylic monomer(s) set to be 50% by weight or more allows the adhesive agent layer to have a satisfactory adhesiveness.

The acrylic polymer preferably includes, as the monomer units, polar group-containing monomers such as a hydroxyl group-containing monomer and a carboxyl group-containing monomer. The content of the polar group-containing monomer(s) is preferably 0.1 to 20% by weight, more preferably 0.2 to 10% by weight and furthermore preferably 0.2 to 7% by weight in relation to the total amount of the monomers constituting the acrylic polymer. The content of the polar group-containing monomer(s) set to fall within the aforementioned range allows the cohesive force to be exhibited more sufficiently. The content of the polar group-containing monomer(s) set to be 20% by weight or less allows the adhesive agent layer to have a satisfactory adhesiveness.

The hydroxyl group-containing monomer means a polymerizable monomer having one or more hydroxyl groups in the monomer structure thereof. Examples of the hydroxyl group-containing monomer include: 2-hydroxyethyl (meth)acrylate, 3-hydroxypropyl (meth)acrylate, 2-hydroxybutyl (meth)acrylate, 4-hydroxybutyl (meth)acrylate, 5-hydroxypentyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol (meth)acrylamide, N-hydroxy (meth)acrylamide, vinyl alcohol, allyl alcohol, 2-hydroxyethyl vinyl ether, 4-hydroxybutyl vinyl ether and diethylene glycol monovinyl ether. Among these, 4-hydroxybutyl (meth)acrylate, 6-hydroxyhexyl (meth)acrylate and the like are preferably used.

The carboxyl group-containing monomer means a polymerizable monomer having one or more carboxyl groups in the monomer structure thereof. Examples of the carboxyl group-containing monomer include acrylic acid, methacrylic acid, carboxyethyl (meth) acrylate, carboxypentyl (meth) acrylate, itaconic acid, maleic acid, fumaric acid and crotonic acid. Among these, acrylic acid and methacrylic acid are preferably used.

In the acrylic polymer in the present invention, monomers other than the aforementioned monomers can be used within a range not impairing the advantageous effect of the present invention. Examples of the monomers other than the aforementioned monomers include polymerizable monomers for regulating the glass transition point and the peeling property of the acrylic polymer.

As the other polymerizable monomers used in the acrylic polymer of the present invention, cohesive force and heat resistance improving components, adhesive force improving components, components having functional groups functioning as cross-linking base points or other components can be appropriately used. Examples of the cohesive force and heat resistance improving components include sulfonic acid group-containing monomers, phosphoric acid group-containing monomers, cyano group-containing monomers, vinyl ester monomers and aromatic vinyl monomers. Examples of the adhesive force improving components include amide group-containing monomers, amino group-containing monomers, imide group-containing monomers, epoxy group-containing monomers and vinyl ether monomers. Moreover, the monomers in which R² in the foregoing general formula (1) is an alkyl group having 1 or 15 or more carbon atoms and other monomers can be appropriately used. These monomers may be used each alone or as mixtures of two or more thereof.

Examples of the sulfonic acid group-containing monomers include styrene sulfonic acid, allyl sulfonic acid, 2-(meth)acylamido-2-methylpropanesulfonic acid, (meth)acrylamidopropanesulfonic acid, sulfopropyl (meth)acrylate and (meth)acryloyloxynaphthalenesulfonic acid.

Examples of the phosphoric acid group-containing monomers include 2-hydroxyethylacryloyl phosphate.

Examples of the cyano group-containing monomers include acrylonitrile and ethacrylonitrile.

Examples of the vinyl ester monomers include vinyl acetate, vinyl propionate, vinyl laurate and vinylpyrrolidone.

Examples of the aromatic vinyl monomers include styrene, chlorostyrene, chloromethylstyrene and α-methylstyrene.

Examples of the amide group-containing monomers include (meth)acrylamide, N,N-dimethyl (meth)acrylamide, N,N-diethyl (meth)acrylamide, N,N-diethyl methacrylamide, N-isopropyl (meth)acrylamide, N-methylol (meth)acrylamide, N-methoxymethyl (meth)acrylamide, N-butoxymethyl (meth)acrylamide, dimethyaminoethyl (meth)acrylate, t-butylaminoethyl (meth)acrylate, diacetone (meth)acrylamide, N-vinylacetamide, N,N'-methylene bis(meth)acrylamide, N,N-dimethylaminopropyl (meth)acrylamide, N-vinylcaprolactam and N-vinyl-2-pyrrolidone.

Examples of the amino group-containing monomers include aminoethyl (meth)acrylate, N,N-dimethylaminoethyl (meth)acrylate, N,N-dimethylaminopropyl (meth)acrylate and N-(meth)acryloyl morpholine.

Examples of the imide group-containing monomers include N-cyclohexyl maleimide, N-phenyl maleimide, N-methyl maleimide, N-ethyl maleimide, N-propyl maleimide, N-isopropyl maleimide, N-butyl maleimide and itacon imide.

Examples of the epoxy group-containing monomers include glycidyl (meth)acrylate and allyl glycidyl ether.

Examples of the vinyl ether monomers include methyl vinyl ether, ethyl vinyl ether and isobutyl vinyl ether.

Examples of the (meth)acrylic monomers having an alkyl group having 1 or 15 or more carbon atoms include methyl (meth)acrylate, pentadecyl (meth)acrylate, hexadecyl (meth)acrylate and octadecyl (meth)acrylate.

The monomers constituting the acrylic polymer may include, if necessary, other copolymerizable monomers for the purpose of upgrading the properties such as cohesive force. Examples of such copolymerizable monomers include vinyl compounds, (meth)acrylic acid esters of cyclic alcohols and (meth)acrylic acid esters of polyhydric alcohols. Examples of the vinyl compounds include vinyl acetate, styrene and vinyltoluene. Examples of the (meth)acrylic acid esters of cyclic alcohols include cyclopentyl di(meth)acrylate and isobornyl (meth)acrylate. Examples of the (meth)acrylic acid esters of polyhydric alcohols include neopentylglycol di(meth)acrylate, hexanediol di(meth)acrylate, propyleneglycol di(meth)acrylate, trimethylolpropane tri(meth)acrylate, tetramethylolmethane tri(meth)acrylate and dipentaerythritol hexa(meth)acrylate.

The other coplymerizable monomers may be used each alone or as mixtures of two or more thereof; the total content of the other copolymerizable monomer(s) is preferably 0 to 50% by weight, more preferably 0 to 35% by weight and furthermore preferably 0 to 25% by weight in relation to the total amount of the monomers constituting the acrylic polymer.

The weight average molecular weight of the acrylic polymer is preferably 600,000 or more, more preferably 700,000 to 3,000,000 and furthermore preferably 800,000 to 2,500,000. The weight average molecular weight of 600,000 or more allows the adhesive agent layer to have a satisfactory durability. From the viewpoint of workability, the weight average molecular weight is preferably 3,000,000 or less. The weight average molecular weight as referred to herein means a value as measured by GPC(gel permeation chromatography) and derived relative to polystyrene standards.

Because of the easiness in establishing the adhesiveness balance in the adhesive agent layer, the glass transition temperature (Tg) of the acrylic polymer is -5°C or lower and preferably -10°C or lower. The glass transition temperature of -5°C or lower results in a satisfactory fluidity of the acrylic polymer to allow the adhesive agent layer to have a sufficient wettability to the adherend and to have thus a satisfactory adhesive force to the adherends. The glass transition temperature (Tg) of the acrylic polymer can be regulated so as to fall within the aforementioned range by appropriately varying the components and the composition ratios of the monomers used.

Such an acrylic polymer can be produced by heretofore known production methods such as solution polymerization, bulk polymerization, emulsion polymerization and various radical polymerizations. The obtained acrylic polymer may be either a homopolymer or a copolymer; when the obtained acrylic polymer is a copolymer, the copolymer may be any of a random copolymer, a block copolymer, a graft copolymer and the like.

In a solution polymerization, for example, ethyl acetate, toluene and the like are used as a polymerization solvent. A specific example of the solution polymerization is such that the reaction is performed in a flow of an inert gas such as nitrogen, by adding 0.01 to 0.2 part by weight of azobisisobutyronitrile as a polymerization initiator in relation to 100 parts by weight of the total amount of the monomers, usually at approximately 50 to 70°C for approximately 8 to 30 hours.

The polymerization initiator, a chain transfer agent, an emulsifier and the like used in the radical polymerization are not particularly limited, and can be used in an appropriately selected manner.

Examples of the polymerization initiator used in the present invention include azo initiators, salts of persulfuric acid, peroxide initiators and redox initiators each as a combination of a peroxide and a reducing agent; however, the polymerization initiator used in the present invention is not limited to these. Examples of the azo initiators include 2,2'-azobisisobutyronitrile, 2,2'-azobis(2-amidinopropane) dihycliochloride, 2,2'-azobis[2-(5-methyl-2-imidazolin-2-yl)propanel dihydrochloride, 2,2'-azobis(2-methylpropioneamichne) disulfate, 2,2'-azobis(N,N'-dimethyleneisobutylamidine) and 2,2'-azobis[N-(2-carboxyethyl)-2-methylpropioneamidine] hydrate (VA-057, manufactured by Wako Pure Chemical Indusitres, Ltd.). Examples of the salts of persulfuric acid include potassium persulfate and ammonium persulfate. Examples of the peroxide initiators include di(2-ethylhexyl) peroxydicarbonate, di(4-t-butylcyclohexyl) peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramathylbutylperoxy-2-ethyl hexanoate, di(4-methylbenzoyl) peroxide, dibenzoyl peroxide, t-butylperoxy isobutyrate, 1,1-di(t-hexylperoxy)cyclohexane, t-butyl hydroperoxide and hydrogen peroxide. Examples of the redox initiators include a combination of a salt of persulfuric acid and a sodium bisulfite and a combination of a peroxide and sodium ascorbate.

The polymerization initiators may be used each alone or as mixtures of two or more thereof. The total amount of the polymerization initiators is preferably approximately 0.005 to 1 part by weight and more preferably approximately 0.02 to 0.5 part by weight in relation to 100 parts by weight of the monomer(s).

In the present invention, a chain transfer agent may also be used in polymerization. The use of the chain transfer agent allows the molecular weight of the acrylic polymer to be appropriately regulated.

Usable examples of the chain transfer agent include lauryl mercaptan, glycidyl mercaptan, mercaptoacetic acid, 2-mercaptoethanol, thioglycolic acid, 2-ethylhexyl thioglycolate and 2,3-dimercapto-1-propanol.

These chain transfer agents may be used each alone or as mixtures of two or more thereof. The total content of the chain transfer agent(s) is usually approximately 0.01 to 0.1 part by weight in relation to 100 parts by weight of the monomer(s).

Usable examples of the emulsifiers used in performing emulsion polymerization include anionic emulsifiers and nonionic emulsifiers. Examples of the anionic emulsifiers include sodium laurylsulfate, ammonium laurylsulfate, sodium dodecylbenzenesulfonate, ammonium polyoxyethylene alkyl ether sulfate and sodium polyoxyethylene alkylphenyl ether sulfate. Examples of the nonionic emulsifiers include polyoxyethylene alkyl ether, polyoxyethylene alkylphenyl ether, polyoxyethylene fatty acid ester and polyoxyethylene-polyoxypropylene block polymer. These emulsifiers may be used each alone or in combinations of two or more thereof.

Moreover, as reactive emulsifiers, it is possible to use emulsifiers into which a radical polymerizable functional group such as a propenyl group or an ally ether group is introduced, such as Aquaron HS-10, HS-20, KH- 10, BC-05, BC-10, BC-20 (the foregoing are all manufactured by Dai-ichi Kogyo Seiyaku Co., Ltd.) and Adeka Reasoap SE10N (manufactured by Adeka Corp.). Preferably, the reactive emulsifier is incorporated into the polymer chain after polymerization, and hence the water resistance is improved. The amount of the emulsifier(s) used is, in relation to 100 parts by weight of the monomer(s), 0.3 to 5 parts by weight and preferably 0.5 to 1 part by weight from the viewpoint of polymerization stability and mechanical stability.

For the purpose of improving the adhesive force and the durability of the adhesive agent layer, it is preferable to include a cross-linking agent as the component constituting the acrylic polymer in the thermally-conductive adhesive agent composition. As the cross-linking agent, it is possible to use heretofore known cross-linking agents such as isocyanate-based cross-linking agents, epoxy-based cross-linking agents, melamine-based cross-linking agents, oxazoline-based cross-linking agents, carbodiimide-based cross-linking agents, aziridine-based cross-linking agents and metal chelate-based cross-linking agents; in particular, it is preferable to include an isocyanate-based cross-linking agent.

Usable examples of the isocyanate-based cross-linking agents include: aromatic isocyanates such as tolylenediisocyanate and xylenediisocyanate; alicyclic isocyanates such as isophorone diisocyanate; and aliphatic isocyanates such as hexamethylene diisocyanate.

More specifically, usable examples of the isocyanate-based cross-linking agents include lower aliphatic polyisocyanates, alicyclic isocyanates, aromatic diisocyanates, isocyanate adducts, various adducts with polyols and multifunctionalized polyisocyanates. Examples of the lower aliphatic polyisocyanates include butylene diisocyanate and hexamethylene diisocyanate. Examples of the alicyclic isocyanates include cyclopentylene diisocyanate, cyclohexylene diisocyanate and isophorone diisocyanate. Examples of the aromatic diisocyanates include 2,4-tolylene diisocyanate, 4,4'-diphenylmethane diisocyanate, xylylene diisocyanate and polymethylene polyphenyl isocyanate. Examples of the isocyanate adducts include trimethylolpropane/tolylene diisocyanate trimer adduct (trade name: Coronate L, manufactured by Nippon Polyurethane Industry Co., Ltd.), trimethylolpropane/hexamethylene diisocyanate trimer adduct (trade name: Coronate HL, manufactured by Nippon Polyurethane Industry Co., Ltd.) and isocyanurate-modified hexamethylene diisocyanate (trade name: Coronate HX, manufactured by Nippon Polyurethane Industry Co., Ltd.). Examples of the various adducts with polyols include polyether polyisocyanate and polyester polyisocyanate, and adducts of these with various polyols. Examples of the multifunctionalized polyisocyanate include polyisocyanates multifunctionalized with isocyanurate bonds, buret bonds, allophanate bonds and the like.

The cross-linking agents may be used each alone or as mixtures of two or more thereof. The total amount of the cross-linking agent(s) is preferably 0.02 to 5 parts by weight, more preferably 0.04 to 3 parts by weight and furthermore preferably 0.05 to 2 parts by weight in relation to 100 parts by weight of the acrylic polymer. The use of the cross-linking agent(s) within the aforementioned range enables the adhesive agent layer to be more certainly improved in cohesive force and durability. The used amount of the cross-linking agent(s) set to be 2 parts by weight or less results in an appropriate crosslinkage formation to allow the adhesive agent layer to have satisfactory adhesiveness.

In the present invention, the addition amount of the cross-linking agent(s) is regulated in such a way that the gel fraction of the cross-linked thermally-conductive adhesive agent composition is preferably 40 to 90% by weight, more preferably 50 to 85% by weight and furthermore preferably 55 to 80% by weight. The gel fraction set to be 40% by weight or more allows the adhesive agent layer to be improved in cohesive force and to have satisfactory durability. The gel fraction set to be 90% by weight or less allows the adhesive agent layer to have satisfactory adhesiveness.

The gel fraction (% by weight) can be obtained as follows: a sample of a dry weight W1 (g) is sampled from the cross-linked thermally-conductive adhesive agent composition, and immersed in ethyl acetate; then the insoluble matter of the sample is taken out from the ethyl acetate; then after drying, the weight W2 (g) of the insoluble matter is measured, and the gel fraction is derived from the formula (W2/W1) × 100.

The thermally-conductive material enables the thermal conductivity of the thermally-conductive double-sided adhesive sheet to be improved through being included in the adhesive agent layer. The thermally-conductive material used in the present invention is not particularly limited; however, examples of the thermally-conductive material used in the present invention include boron nitride, aluminum nitride, silicon nitride, gallium nitride, aluminum hydroxide, magnesium hydroxide, silicon carbide, silicon dioxide, aluminum oxide, titanium oxide, zinc oxide, tin oxide, copper oxide, nickel oxide, antimonic acid-doped tin oxide, calcium carbonate, barium titanate, potassium titanate, copper, silver, gold, nickel, aluminum, platinum, carbon black, carbon tube (carbon nanotube), carbon fiber and diamond. Among these thermally-conductive materials, boron nitride, aluminum hydroxide and aluminum oxide are preferably used because of being high in thermal conductivity and having electrical insulation property These thermally-conductive materials may be used each alone or in combinations of two or more thereof.

The shapes of the thermally-conductive materials used in the present invention are not particularly limited, and may be granular, needle-like, plate-like or layer-like. The granular shape includes, for example, a spherical shape, a rectangular parallelepiped, a crushed shape and variant shapes of these.

In the present invention, when the thermally-conductive material is granular (spherical), the average primary particle size thereof is 0.1 to 1000 µm, preferably 1 to 100 µm and more preferably 2 to 20 µm. The average primary particle size of 1000 µm or less can prevent the granular thermally-conductive material from offering a cause for the occurrence of the thickness unevenness of the adhesive agent layer caused by the particle size of the granular thermally-conductive material exceeding the thickness of the adhesive agent layer, even when the adhesive agent layer is formed with a thickness of less than 1000 µm.
The average primary particle size is a volume-based value obtained by a particle size distribution measurement method based on a laser scattering method. Specifically, the average primary particle size is a value obtained by measuring the D50 value with a laser scattering particle size distribution analyzer.

When the thermally-conductive material is needle-like or plate-like, the maximum length thereof is 0.1 to 1000 µm, preferably 1 to 100 µm and more preferably 2 to 20 µm. The maximum length set to be 1000 µm or less suppresses the mutual coagulation of the particles of the needle-like or plate-like thermally-conductive material, and hence the handling of the thermally-conductive material becomes easy. Moreover, the aspect ratios of these substances (represented by the ratio of long axis length/short axis length or by the ratio of long axis length/thickness for a needle-like crystal, and by the ratio of diagonal length/thickness or by the ratio of long side length/thickness for a plate-like crystal) are preferably 1 to 10000 and preferably 10 to 1000.

As such thermally-conductive materials as described above, for example, the following commonly used thermally-conductive materials can be used; as boron nitride, "HP-40" manufactured by Mizushima Ferroalloy Co., Ltd. and "PT620" manufactured by Momentive Performance Materials Inc.; as aluminum hydroxide, "Hidilite H-32" and "Hidilite H-42" manufactured by Showa Denko K.K.; as aluminum oxide, "AS-50" manufactured by Showa Denko K.K.; as magnesium hydroxide, "KISUMA 5A" manufactured by Kyowa Chemical Industry Co., Ltd.; as antimony-doped tin oxide, "SN-100S," "SN-100P" and "SN-100D(aqueous dispersion)" manufactured by Ishihara Sangyo Kaisha, Ltd.; as titanium oxide, "TTO Series" manufactured by Ishihara Sangyo Kaisha, Ltd.; as zinc oxide, "SnO-310," "SnO-350" and "SnO-410" manufactured by Sumitomo Osaka Cement Co., Ltd.

In the present invention, the used amount of the thermally-conductive material is appropriately selected according to the adhesive force of the adhesive agent layer formed of the thermally-conductive adhesive agent composition formed into a sheet shape. Specifically, when the strong adhesive agent composition is prepared, the content of the thermally-conductive material is set to be preferably less than 150 parts by weight, more preferably 10 to 150 parts by weight and furthermore preferably 50 to 130 parts by weight in relation to 100 parts by weight of the acrylic polymer. Additionally, when the weak adhesive agent composition is prepared, the content of the thermally-conductive material is set to be preferably 150 parts by weight or more, more preferably 150 to 1000 parts by weight and furthermore preferably 180 to 600 parts by weight in relation to 100 parts by weight of the acrylic polymer. The used amounts of the thermally-conductive material set as described above allow the adhesive agent layers each to have a satisfactory flexibility and a satisfactory adhesive force. Such used amounts of the thermally-conductive material can also impart a sufficient thermal conductivity to each of the adhesive agent layers.

When the thermally-conductive adhesive agent composition is produced, a silane coupling agent can be used for the purpose of improving the affinity between the thermally-conductive material and the acrylic polymer or for the purpose of improving the adhesive force and the durability of the adhesive agent layers. The silane coupling agent is not particularly limited; heretofore known silane coupling agents can be used in an appropriately selected manner.

Examples of the silane coupling agent include: epoxy group-containing silane coupling agents, amino group-containing silane coupling agents, (meth)acryl group-containing silane coupling agents and isocyanate group-containing silane coupling agents. Examples of the epoxy group-containing silane coupling agents include 3-glycidoxypropyltrimethoxysilane, 3-glycidoxypropyltriethoxysilane, 3-glycidoxypropylmethyldiethoxysilane and 2-(3,4-epoxycyclohexyl) ethyltrimethoxysilane. Examples of the amino group-containing silane coupling agents include 3-aminopropyltrimethoxysilane, N-2-(aminoethyl)-3-aminopropylmethyldimethoxysilane and 3-trietlioxysilyl-N-(1,3-dimethylbutylidene)propylamine. Examples of the (meth)acryl group-containing silane coupling agents include 3-acryloxypropyltrimethoxysilane and 3-methacryloxypropyltriethoxysilane. Examples of the isocyanate group-containing silane coupling agents include 3-isocyanate propyltriethoxysilane. The use of such silane coupling agents is preferable for the purpose of improving the durability.

The silane coupling agents may be used each alone or as mixtures of two or more thereof. The total content of the silane coupling agent(s) is set to be preferably 0.01 to 10 parts by weight, more preferably 0.02 to 5 parts by weight and furthermore preferably 0.05 to 2 parts by weight in relation to 100 parts by weight of the acrylic polymer. The use of the silane coupling agent(s) within the aforementioned range enables the cohesive force and durability to be more certainly improved. The content of the silane coupling agent(s) set to be 0.01 part by weight or more enables the surface of the granular thermally-conductive material to be sufficiently coated to improve the affinity with the acrylic polymer. The content of the silane coupling agent(s) set to be 10 parts by weight or less allows the adhesive agent layer to have a satisfactory thermal conductivity.

When the thermally-conductive adhesive agent composition is produced, a tackifier resin can be used for the purpose of improving the adhesive force and the durability of the adhesive agent layer. The tackifier resin is not particularly limited; heretofore known tackifier resins can be used in an appropriately selected manner. Usable examples of the tackifier resin include rosin-based resins, terpene-based resins, aliphatic petroleum resins, aromatic petroleum resins, copolymer petroleum resins, alicyclic petroleum resins, xylene resins and elastomers.

The content of the tackifier resin is preferably 10 to 100 parts by weight, more preferably 20 to 80 parts by weight and furthermore preferably 30 to 50 parts by weight in relation to 100 parts by weight of the acrylic polymer.

Although no detailed description is made here, the chemicals commonly used as rubber/plastic compounding chemicals can be appropriately added to the thermally-conductive adhesive agent composition, within the ranges not impairing the advantageous effect of the present invention, in addition to those chemicals as described above, such as the acrylic polymer component and the thermally-conductive material. Examples of the rubber/plastic compounding chemicals include dispersant, antiaging agent, antioxidant, processing aid, stabilizer, antifoaming agent, flame retardant, thickener and pigment.

Now, description is made on the method for preparing the thermally-conductive double-sided adhesive sheet (a sheet in which a release film is bonded to each of both sides of the sheet) by using the thermally-conductive adhesive agent composition composed of such constitutional components as described above.

First, the acrylic polymer component composed of such components as described above, the thermally-conductive material and other components are mixed and stirred in a solvent such as toluene to prepare two liquid thermally-conductive adhesive agent compositions (coating liquids ) (specifically, a solution of the strong adhesive agent composition and a solution of the weak adhesive agent composition). In this case, each of these solutions may include a dispersant for the purpose of improving the dispersibility

The two coating liquids are different from each other in the content of the thermally-conductive material in relation to the acrylic polymer in such a way that when the two coating liquids are formed into sheet shapes to form adhesive agent layers, the adhesive agent layers are different in adhesive force from each other. In other words, an adhesive agent layer having a strong adhesive force (the strong adhesive agent layer) is formed of one coating liquid (the solution of the strong adhesive agent composition), and an adhesive agent layer having a weak adhesive force (the weak adhesive agent layer) is formed of the other coating liquid (the solution of the weak adhesive agent composition).

Next, one of the two coating liquids is applied onto a release film one side of which is treated with a release agent (such as silicone). Specifically one coating liquid (the strong adhesive coating liquid) is applied onto the release-treated side of a release film to form a strong adhesive agent layer having a predetermined thickness. Similarly, the other coating liquid (the weak adhesive coating liquid) is applied onto the release-treated side of another release film to form a weak adhesive agent layer having a predetermined thickness.

As the method for applying (coating) the coating liquids onto the release films in a predetermined thickness, the methods having hitherto been widely used can be adopted. Usable examples of such coating methods include an extrusion coating method based on roll coating, kiss-roll coating, gravure coating, reverse coating, roll brush coating, spray coating, dip roll coating, bar coating, knife coating, air-knife coating, curtain coating, lip coating or die coating.

The thickness of the adhesive agent layer formed on the release film is preferably 0.5 to 250 µm, more preferably 2.5 to 100 µm and furthermore preferably 5 to 50 µm. The thermal conductivity of each of the strong adhesive agent layer and the weak adhesive agent layer is preferably 0.5 W/m·K or more and more preferably 0.6 W/m·K or more. The thermal conductivity of 0.5 W/m·K or more enables a sufficient thermal conductivity to be exhibited, for example, even in the case where the thermally-conductive double-sided adhesive sheet is used as adhering to a heat sink of a semiconductor module.

Examples of the constitutional material of the release film include thin leaf bodies such as a plastic film, a porous material and a laminated body; a plastic film is preferably used because of being excellent in surface smoothness. Examples of the plastic film include polyethylene, polypropylene and polyethylene terephthalate. Examples of the porous material include paper, cloth and non-woven fabric. Examples of the laminated body include net, foam sheets, metal foil and laminated bodies of these.

The plastic film is not particularly limited as long as the plastic film is capable of protecting the adhesive agent layers. Usable examples of the plastic film include polyethylene film, polypropylene film, polybutene film, polybutadiene fil polymethylpentene film, polyvinyl chloride film, vinyl chloride copolymer film, polyethylene terephthalate film, polybutylene terephthalate film, polyurethane film and ethylene-vinyl acetate copolymer film.

The release film may be subjected to, if necessary, a release treatment, an antifouling treatment and an antistatic treatment. Examples of the release treatment and the antifouling treatment include treatments based on a release agent such as a silicone-based release agent, a fluorine-based release agent, a long chain alkyl-based release agent or a fatty acid amide-based release agent or a silica powder. Examples of the antistatic treatment include a coating type antistatic treatment, a kneading type antistatic treatment or a vapor deposition type antistatic treatment. In particular, by appropriately applying a release treatment such as a silicone treatment, a long chain alkyl treatment and a fluorine treatment to the surface of the release film, the release property from each of the adhesive agent layers can be more upgraded.

The thickness of the release film is usually 5 to 200 µm and preferably approximately 5 to 100 µm.

The release film with the strong adhesive agent layer and the release film with the weak adhesive agent layer are laminated on each other in such a way that the adhesive agent layers are superposed on each other. In this way, the thermally-conductive double-sided adhesive sheet is formed in which the adhesive force of the strong adhesive agent layer side (strong adhesive side) is stronger than the adhesive force of the weak adhesive agent layer side (weak adhesive side), and to each of both sides of which a release film is bonded.

The thickness of the adhesive agent layer formed by laminating the strong adhesive layer and the weak adhesive agent layer on each other is preferably 1 to 500 µm, more preferably 5 to 200 µm and furthermore preferably 10 to 100 µm.

Alternatively, when the release film with the strong adhesive agent layer and the release film with the weak adhesive agent layer are laminated on each other, a support may also be disposed between the strong adhesive agent layer and the weak adhesive agent layer. Thus, a thermally-conductive double-sided adhesive sheet is formed in which a support intervenes between the strong adhesive agent layer and the weak adhesive agent layer.

Examples of the support include a plastic base material, a porous material and a metal foil. Examples of the plastic base material include a polyethylene terephthalate (PET) film and a polyester film. Examples of the porous material include paper and nonwoven fabric.

The plastic base material is not particularly limited as long as the plastic base material can be formed into a sheet shape or a film shape; examples of the plastic base material include polyolefin film, polyester film, polyamide film, polyvinyl chloride film, polyvinylidene chloride film and polycarbonate film. The thickness of the film is usually 4 to 100 µm and preferably approximately 4 to 25 µm. Examples of the polyolefin film include polyethylene, polypropylene, poly-1-butene, poly-4-methyl-1-pentene, ethylene/propylene copolymer, ethylene/1-butene copolymer, ethylene/vinyl acetate copolymer, ethylene/ethyl acrylate copolymer and ethylene/vinyl alcohol copolymer. Examples of the polyester film include polyethylene terephthalate, polyethylene naphthalate and polybutylene terephthalate. Examples of the polyamide film include polyacrylate film, polystyrene film, nylon 6, nylon 6,6 and partially aromatic polyamide.

The plastic base material can also be subjected to, if necessary, a release treatment, an antifouling treatment, an adhesion-facilitating treatment and an antistatic treatment. Examples of the release treatment and the antifouling treatment include treatments based on a release agent such as a silicone-based release agent, a fluorine-based release agent, a long chain alkyl-based release agent or a fatty acid amide-based release agent or a silica powder. Examples of the adhesion-facilitating treatment include an acid treatment, alkali treatment, a primer treatment, a corona treatment, a plasma treatment or a UV treatment. Examples of the antistatic treatment include a coating type antistatic treatment, a kneading type antistatic treatment or a vapor deposition type antistatic treatment.

The thus described thermally-conductive double-sided adhesive sheet is configured in such a way that the adhesive force to the adherend bonded to one side of the adhesive agent layer and the adhesive force to the adherend bonded to the other side of the adhesive agent layer are different from each other, and hence the adherends respectively bonded to both sides are allowed to adhere to each other with different adhesive forces. In this way, even in the case where the adhesive force of the one side of the thermally-conductive double-sided adhesive sheet is configured such that the thermally-conductive double-sided adhesive sheet cannot be detached from the adherend bonded to the one side, the adhesive force of the other side of the thermally-conductive double-sided adhesive sheet can be configured such that the thermally-conductive double-sided adhesive sheet can be easily detached from the adherend bonded to the other side; thus, it comes to be possible to use the thermally-conductive double-sided adhesive sheet by selecting the sides to be bonded to and the types of the adherends to be bonded according to the types of the adherends and the use environment.

### EXAMPLES

Now, the present invention is described in more detail with reference to Examples. However, the present invention is not limited to these Examples.

### Example 1

### 1. Preparation ofAcrylic Polymer Solution

In a reaction vessel equipped with a condenser tube, a nitrogen introduction tube, a thermometer and a stirrer, 70 parts by weight of butyl acrylate, 30 parts by weight of 2-ethylhexyl acrylate, 3 parts by weight of acrylic acid, 0.05 part by weight of 4-hydroxybutyl acrylate, 0.1 parts by weight of 2,2'-azobisisobutyronitrile (initiator) and 155 parts by weight of toluene were placed; then the air in the reaction system was sufficiently replaced with nitrogen gas. Then, the resulting mixture was heated at 80°C for 3 hours to yield an acrylic polymer solution having a solid content of 40.0% by weight.

### 2. Preparation of Thermally-Conductive Strong Adhesive Agent Composition (Strong Adhesive Coating Liquid)

To 100 parts by weight of the acrylic polymer solution, 30 parts by weight of a tackifier (trade name: Pensel D-125, manufactured by Arakawa Chemical Industries, Ltd.), 100 parts by weight of a thermally conductive aluminum hydroxide powder (trade name: Hidilite H-32, average primary particle size: 8 µm, manufactured by Showa Denko K.K.) as a thermally-conductive material, 1 part by weight of a dispersant (trade name: Plysurf A212E, manufactured by Dai-ichi Kogyo Seiyaku Co., Ltd.) and 2 parts by weight of a multifunctional isocyanate compound (trade name: Coronate L, manufactured by Nippon Polyurethane Industry Co., Ltd.) as a cross-linking agent were added, and the resulting mixture was stirred with a disper for 15 minutes to prepare the strong adhesive coating liquid.

### 3. Preparation of Thermally- Conductive Weak Adhesive Agent Composition (Weak Adhesive Coating Liquid)

To 100 parts by weight of the acrylic polymer solution, 30 parts by weight of a tackifier (trade name: Pensel D-125, manufactured by Arakawa Chemical Industries, Ltd.), 200 parts by weight of a thermally conductive aluminum hydroxide powder (trade name: "Hidilite H-32, manufactured by Showa Denko K.K.) as a thermally-conductive material, 1 part by weight of a dispersant (trade name: Plysurf A212E, manufactured by Dai-ichi Kogyo Seiyaku Co., Ltd.) and 2 parts by weight of a multifunctional isocyanate compound (trade name: Coronate L, manufactured by Nippon Polyurethane Industry Co., Ltd.) as a cross-linking agent were added, and the resulting mixture was stirred with a disper for 15 minutes to prepare the weak adhesive coating liquid.

### 4. Preparation of Thermally-Conductive Double-Sided Adhesive Sheet (hereinafter, referred to as adhesive sheet)

The release-treated side of a release film prepared by treating one side of a polyethylene terephthalate film with a silicone release agent was coated with the obtained strong adhesive coating liquid in such a way that the thickness of the strong adhesive agent layer after drying was 50 µm, and the coated release film was dried at 70°C for 15 minutes to form a strong adhesive agent layer on the release film. The release-treated side of another release film was coated with the obtained weak adhesive coating liquid in such a way that the thickness of the weak adhesive agent layer after drying was 50 µm, and the coated release film was dried at 70°C for 15 minutes to form a weak adhesive agent layer on the release film.
The proportion of the thermally-conductive material in the strong adhesive agent layer after drying was 29% by volume, and the proportion of the thermally-conductive material in the weak adhesive agent layer was 45% by volume.
Then, the release film with the strong adhesive agent layer and the release film with the weak adhesive agent layer were laminated on each other in such a way that the strong adhesive agent layer and the weak adhesive agent layer are superposed on each other to prepare an adhesive sheet including an adhesive agent layer constituted with the strong adhesive agent layer and the weak adhesive agent layer. The adhesive sheet was in a condition such that the release films were respectively bonded to both sides of the adhesive sheet.

### Example 2

An adhesive sheet was prepared under the same conditions as in Example 1 except that in the preparation of the weak adhesive coating liquid, 400 parts by weight of the thermally conductive aluminum hydroxide powder was used in relation to 100 parts by weight of the acrylic polymer. The proportion of the thermally-conductive material in the weak adhesive agent layer after drying was 45% by volume.

### Comparative Example 1

An adhesive sheet including an adhesive agent layer composed only of the strong adhesive agent layer was prepared by coating the release film with the strong adhesive coating liquid of Example 1 in such a way that the thickness of the adhesive agent layer after drying was 100 µm and by then drying the coated release film at 70°C for 15 minutes.

### Comparative Example 2

An adhesive sheet including an adhesive agent layer composed only of the weak adhesive agent layer was prepared by coating the release film with the weak adhesive coating liquid of Example 2 in such a way that the thickness of the adhesive agent layer after drying was 100 µm and by then drying the coated release film at 70°C for 15 minutes.

### <Measurement of Adhesive Force>

### 1. Measurement 1

A 25-µm thick PET film was bonded to the weak adhesive agent layer side (weak adhesive side) in the adhesive sheet of each of Examples, and the adhesive sheet with the PET film was cut to a width of 20 mm and a length of 150 mm to prepare a measurement sample.
Next, the release film was peeled off from the strong adhesive agent layer side (strong adhesive side) and the measurement sample was bonded to a SUS304 steel plate in an atmosphere of 23°C and 50% RH with the aid of a back and forth movement of a 2-kg roller. Then, the SUS304 steel plate with the measurement sample bonded thereto was cured at 23°C for 30 minutes.
Before bonding of the adhesive sheet, the surface of the SUS304 steel plate was polished with No. 360 waterproof abrasive paper and further sufficiently degreased with toluene, and then the SUS304 steel plate was dried in an atmosphere of 23°C and 50% RH for 30 minutes and then used.
After the curing, a peeling test was performed by using the universal tensile tester "TCM-1kNB, manufactured by Minebea Co., Ltd., and the adhesive force of the strong adhesive side to the SUS304 steel plate was measured. The peeling test was performed under the conditions that the peeling angle was 180° and the peeling rate was 300 mm/min. The measurement results thus obtained are shown in Table 1 presented below.

### 2. Measurement 2

A 25-µm thick PET film was bonded to the strong adhesive side in the adhesive sheet of each of Examples, and the adhesive sheet with the PET film was cut to a width of 20 and a length of 150 mm to prepare a measurement sample, and the measurement of the adhesive force of the weak adhesive side was performed under the same conditions as in Measurement 1. The measurement results thus obtained are shown in Table 1 presented below.

### 3. Measurement 3

A 25-µm thick PET film was bonded to one side in the adhesive sheet of each of Comparative Examples, and the adhesive sheet with the PET film was cut to a width of 20 mm and a length of 150 mm to prepare a measurement sample, and the measurement of the adhesive force of the other side was performed under the same conditions as in Measurement 1. The measurement results thus obtained are shown in Table 1 presented below.

### 4. Measurement 4

A 25-µm thick PET film was bonded to the other side in the adhesive sheet of each of Comparative Examples, and the adhesive sheet with the PET film was cut to a width of 20 mm and a length of 150 mm to prepare a measurement sample, and the measurement of the adhesive force of the one side was performed under the same conditions as in Measurement 1. The measurement results thus obtained are shown in Table 1 presented below.

**[Table 1]**

| Measurement Results of Adhesive Force | | | | |
|---|---|---|---|---|
| | Measurement 1 | Measurement 2 | Measurement 3 | Measurement 4 |
| | Adhesive force of strong adhesive side (N/20mm) | Adhesive force of weak adhesive side (N/20mm) | Adhesive force of one side (N/20mm) | Adhesive force of the other side (N/20mm) |
| Example 1 | 7.8 | 4.2 | - | - |
| Example 2 | 7.8 | 0.1 | - | - |
| Comparative Example 1 | - | - | 7.8 | 7.8 |
| Comparative Example 2 | - | - | 0.1 | 0.1 |

### <Measurement of Thermal Conductivity>

### 1. Measurement 1

The measurement of the thermal conductivity of the strong adhesive agent layer in each of the adhesive sheets of Examples and Comparative Examples was performed. The thermal conductivity was derived by obtaining the thermal diffusivity with the "ai-Phase Mobile (trade name)" manufactured by ai-Phase Co., Ltd., and by multiplying the obtained thermal diffusivity by the heat capacity per unit volume of the adhesive sheet measured with a differential scanning calorimeter (DSC). The measurement results thus obtained are shown in Table 2 presented below.

### 2. Measurement 2

The measurement of the thermal conductivity of the weak adhesive agent layer of each of the adhesive sheets of Examples was performed in the same manner as in Measurement 1. The measurement results thus obtained are shown in Table 2 presented below.

**[Table 2]**

| Measurement results of thermal conductivity | | |
|---|---|---|
| | Measurement 1 | Measurement 2 |
| | Thermal conductivity of strong adhesive agentlayer (W/mK) | Thermal conductivity of weak adhesive agentlayer (W/mK) |
| Example 1 | 0.6 | 0.8 |
| Example 2 | 0.6 | 1.4 |
| Comparative Example 1 | 0.6 | - |
| Comparative Example 2 | - | 1.4 |

### <Evaluation of Adhesive Properties>

### 1. Preparation of Evaluation Samples

An evaluation sample was prepared as follows: the release film bonded to the strong adhesive side of each of the adhesive sheets of Examples was peeled off; a glass epoxy substrate was bonded to the strong adhesive side; then, the release film bonded to the weak adhesive side was peeled off; and then a SUS304 steel plate was bonded to the weak adhesive side to prepare the evaluation sample.
Additionally, an evaluation sample was prepared as follows: the release film bonded to one side of each of the adhesive sheets of Comparative Examples was peeled off; a glass epoxy substrate was bonded to the one side; then, the release film bonded to the other side was peeled off; and then a SUS304 steel plate was bonded to the other side to prepare the evaluation sample.

### 2. Evaluation Method

An evaluation was performed as to whether or not the adhesive sheet was peeled off from the glass epoxy substrate when the release bonded to the weak adhesive side or the other side was peeled off under the condition that the adhesive sheet was bonded to the glass epoxy substrate.
An evaluation was also performed on the condition observed when each of the evaluation samples was heat treated at 80°C for 24 hours and then the glass epoxy substrate was peeled off from the SUS 304 steel plate.
The following case was evaluated to be marked with "○": case where the adhesive sheet was not peeled off from the glass epoxy substrate when the release film was peeled off, and the peeling-off between the glass epoxy substrate and the SUS304 steel plate was able to be easily performed. The following case was evaluated to be marked with "×": the case where the adhesive sheet was peeled off from the glass epoxy substrate when the release film was peeled off, and the glass epoxy substrate and the SUS304 steel plate were not able to be easily peeled off from each other. The measurement results thus obtained are shown in Table 3 presented below.

**[Table 3]**

| Evaluation of adhesive properties | | |
|---|---|---|
| Example 1 | ○ | - |
| Example 2 | ○ | - |
| Comparative Example 1 | × | The glass epoxy substrate and the SUS304 were not able to be easily peeled off from each other. |
| Comparative Example 2 | × | When the release film was peeled off from the other side of the adhesive sheet bonded to the epoxy substrate, the adhesive sheet was peeled off from the epoxy substrate. |

In view of the foregoing test results and the foregoing evaluation results, the adhesive sheet of Comparative Example 1 was constituted only with the strong adhesive agent layer, and hence the adhesive force of each of both sides was strong, and consequently the glass epoxy substrate and the SUS304 were not able to be easily peeled off from each other. The adhesive sheet of Comparative Example 2 was constituted only with the weak adhesive agent layer, and hence the adhesive force of each of both sides was weak, and consequently the adhesive sheet was peeled off from the glass epoxy substrate when the release film bonded to the other side was peeled off under the condition that the adhesive sheet was bonded to the glass epoxy substrate. In other words, Comparative Examples 1 and 2 were poor in workability when adherends were bonded to or detached from each other.
On the contrary, in each of the adhesive sheets of Examples 1 and 2, the adhesive force of the strong adhesive side was stronger than the adhesive force of the weak adhesive side, and hence the adhesive sheet was not peeled off the glass epoxy substrate even when the release film of the weak adhesive side was peeled off under the condition that the strong adhesive side was bonded to the glass epoxy substrate. Moreover, the adhesive force of the weak adhesive side was weak, and hence the glass epoxy substrate and the SUS304 were able to be easily peeled off from each other. In other words, the adhesive sheets of Examples 1 and 2 were capable of improving the workability when adherends were bonded to or detached from each other.

## Claims

1. A thermally-conductive double-sided adhesive sheet comprising an adhesive agent layer formed of a thermally-conductive adhesive agent composition formed into a sheet, the thermally-conductive adhesive agent composition including a thermally-conductive material and an acrylic polymer component,
wherein a strong adhesive agent layer forming one side and a weak adhesive agent layer forming the other side of the thermally-conductive double-sided adhesive sheet are laminated in such a way that the adhesive force of the one side of the thermally-conductive double-sided adhesive sheet to an adherend is stronger than the adhesive force of the other side of the thermally-conductive double-sided adhesive sheet to an adherend.

2. The thermally-conductive double-sided adhesive sheet according to claim 1, wherein the strong adhesive agent layer comprises less than 150 parts by weight of the thermally-conductive material in relation to 100 parts by weight of the acrylic polymer component, and the weak adhesive agent layer comprises 150 parts by weight or more of the thermally-conductive material in relation to 100 parts by weight of the acrylic polymer component.

3. The thermally-conductive double-sided adhesive sheet according to claim 1 or 2, wherein the adhesive force of the weak adhesive agent layer to a SUS304 steel plate is less than 5.0 N/20 mm.

4. The thermally-conductive double-sided adhesive sheet according to claim 1 or 2, wherein the adhesive force of the strong adhesive agent layer to a SUS304 steel plate is 5.0 N/20 mm or more.

5. The thermally-conductive double-sided adhesive sheet according to claim 1 or 2, wherein the thermally-conductive material comprises one or two or more substances selected from the group consisting of boron nitride, aluminum hydroxide and aluminum oxide.

6. The thermally-conductive double-sided adhesive sheet according to claim 1 or 2, wherein the thermal conductivity of the strong adhesive agent layer and the thermal conductivity of the weak adhesive agent layer are each 0.5 W/m·K or more.
